**Europäisches Patentamt**

**European Patent Office**

**Office européen des brevets**

(19)

(11) Veröffentlichungsnummer : **0 391 291 B1**

(12) ## EUROPÄISCHE PATENTSCHRIFT

(45) Veröffentlichungstag der Patentschrift :
**28.10.92 Patentblatt 92/44**

(51) Int. Cl.$^5$ : **B66F 9/075**

(21) Anmeldenummer : **90106234.9**

(22) Anmeldetag : **31.03.90**

(54) **Fahrzeug mit zwei frontseitigen Radantriebseinheiten.**

(30) Priorität : **04.04.89 DE 3910885**

(43) Veröffentlichungstag der Anmeldung :
**10.10.90 Patentblatt 90/41**

(45) Bekanntmachung des Hinweises auf die
Patenterteilung :
**28.10.92 Patentblatt 92/44**

(84) Benannte Vertragsstaaten :
**DE ES FR GB IT SE**

(56) Entgegenhaltungen :
**DE-A- 1 964 756**
**DE-B- 1 051 197**

(56) Entgegenhaltungen :
**FR-A- 794 967**
**FR-A- 905 711**
**FR-A- 2 422 865**
**GB-A- 2 074 265**

(73) Patentinhaber : **STILL GMBH**
**Berzeliusstrasse 10**
**W-2000 Hamburg 74 (DE)**

(72) Erfinder : **Evert, Rainer, Dipl.-Ing.**
**Hinterm Dorf 4a**
**W-2071 Siek (DE)**

(74) Vertreter : **Schaefer, Gerhard, Dr.**
**Linde Aktiengesellschaft Zentrale**
**Patentabteilung**
**W-8023 Höllriegelskreuth (DE)**

EP 0 391 291 B1

**Beschreibung**

Die Erfindung betrifft ein Fahrzeug mit zwei frontseitig an einer gemeinsamen Mittelachse angeordneten Radantriebseinheiten, von denen jede eine am radfernen Axialende der Einheit angeordnete Scheibenbremse aufweist. Aus der DE-OS 32 15 830 ist ein Gabelstapler bekannt, bei dem die beiden Radantriebseinheiten fest und unlösbar miteinander verbunden sind. Zwischen ihnen befindet sich etwa in Fahrzeugmitte eine Bremsanlage, die aus zwei Scheiben besteht, von denen jeweils eine einer Radantriebseinheit zugeordnet ist. Die beiden Bremsscheiben werden von einer gemeinsamen Bremszange beaufschlagt. Diese Anordnung bedingt eine aufwendige und teuere Bremszange. Zudem hat eine solche spezielle Bremszange einen erheblichen Platzbedarf. Der Platzbedarf der Bremszange bestimmt den Abstand, der zwischen jeweils einem Rad und der Bremsanlage für die Radantriebseinheit zur Verfügung steht. Die Radantriebseinheit besteht aus einem Elektromotor und einem Vorgelegegetriebe. Da auch das Vorgelegegetriebe eine bestimmte Axiallänge benötigt, reduziert sich nochmals die für den Elektromotor zur Verfügung stehende Axiallänge. Weil aber die axiale Abmessung des Elektromotors bei einer gewünschten Leistung eine vorgegebene Größe darstellt, ergibt sich daraus zusammen mit den Abmessungen der anderen Komponenten bei dem bekannten Gabelstapler der Radstand. Der Radstand ist maßgebend für die Baubreite des Gabelstaplers. Um auch in engen Gängen operieren zu können, ist es erwünscht, daß Gabelstapler bei hoher Tragkraft und hoher Antriebskraft eine möglichst geringe Baubreite aufweisen.

Der vorliegenden Erfindung liegt die Aufgabe zugrunde, einen Gabelstapler zur Verfügung zu stellen, der eine möglichst hohe Antriebskraft besitzt und möglichst schmal gebaut ist.

Diese Aufgabe wird erfindungsgemäß dadurch gelöst, daß jede Bremsscheibe mit einem eigenen Bremssattel versehen ist und die Bremssättel zueinander drehversetzt angeordnet sind. Auf diese Weise können die Radantriebseinheiten näher aneinander gerückt werden oder bei gleichbleibendem Radstand größere Elektromotoren Verwendung finden. Weiterhin ist an Stelle des aufwendigen Bremssattels, der beim bekannten Stand der Technik beide Bremsscheiben betätigt, die Verwendung von serienmäßigen Bremssätteln möglich, wie sie im Automobilbau zum Einsatz kommen. Der Abstand zwischen den Bremsscheiben bzw. zwischen den beiden Radantriebseinheiten wird bestimmt durch die halbe Breite des Bremssattels. Dieser Platz ist ausreichend, um zwischen den Scheiben an beiden Elektromotoren jeweils einen Drehzahlgeber anzubringen.

Die Erfindung soll anhand der nachstehenden schematischen Figuren in einem Ausführungsbeispiel näher erläutert werden.

Es zeigen:

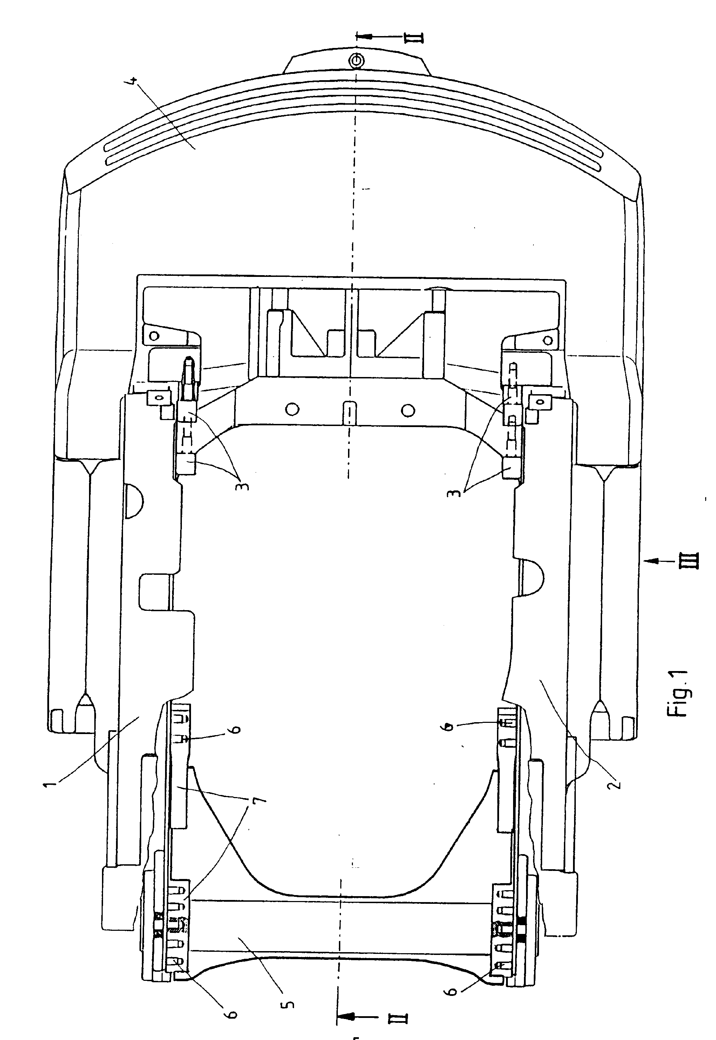

Figur 1 eine Draufsicht auf einen Fahrzeugrahmen eines Gabelstaplers

Figur 2 einen Rahmenlängsschnitt gemäß Linie II-II in Figur 1

Figur 3 eine Seitenansicht eines Rahmenlängsholmes gemäß Pfeil III in Figur 1

Figur 4 eine Draufsicht auf den Rahmenlängsholm gemäß Figur 3

Figur 5 eine Heckansicht des Rahmenlängsholmes gemäß Pfeil V in Figur 3

Figur 6 eine Heckansicht des Rahmenlängsholmes gemäß Figur 5 mit eingebautem Kunststoffinnentank

Figur 7 einen Rahmenquerschnitt gemäß Linie VII-VII in Figur 2 mit eingebauter Radantriebseinheit unter Verzicht auf eine Darstellung des Untergurtes

Figur 8 eine Draufsicht auf die Radantriebseinheit gemäß Pfeil VIII in Figur 7

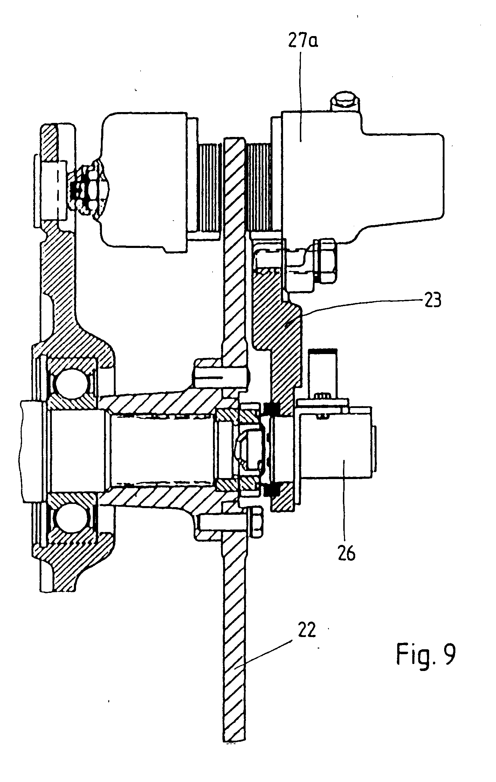

Figur 9 einen Teilschnitt durch die Bremsanlage gemäß Linie IX-IX in Figur 8.

Der Fahrzeugrahmen besteht aus zwei Rahmenlängsholmen 1 und 2, die heckseitig durch Schraubverbindungen 3 mit einem Gegengewicht 4 verbunden sind. Das Gegengewicht 4 bildet einen Querträger und somit einen tragenden Teil des Fahrzeugrahmens. Am frontseitigen Ende des Fahrzeugrahmens ist eine Querverbindung durch einen Untergurt 5 vorgesehen. Dieser ist durch Schraubverbindungen 6 mit den Rahmenlängsholmen 1 und 2 flächig verbunden.

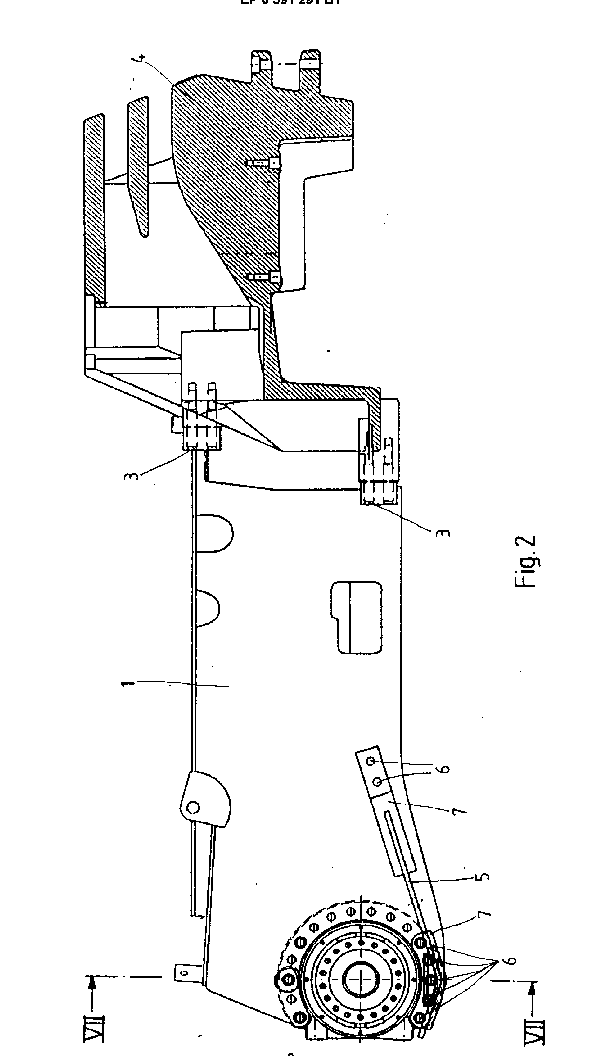

Die Konstruktion des Untergurtes 5 ist in der Zusammenschau mit Figur 2 ersichtlich. Der Untergurt 5 besteht aus einem in Fahrzeuglängsrichtung U-förmigen Blech, wobei die Öffnung zur Heckseite gerichtet ist und die Schenkelinnenseiten des Blechs sich zu den Fahrzeugaußenseiten hin erweitern. In Fahrzeugquerrichtung ist das Blech V-förmig abgewinkelt. Der Anschluß an die Rahmenlängsholme 1 und 2 erfolgt über angeschweißte Bleche 7, die zur Aufnahme der Schraubverbindungen 6 ausgebildet sind. Der Untergurt 5 nimmt die Radkräfte und die asymmetrischen Stoßkräfte auf, die beispielsweise beim Anecken eines der in den Figuren nicht gezeigten Vorderräder oder des ebenfalls nicht dargestellten Hubmastes entstehen.

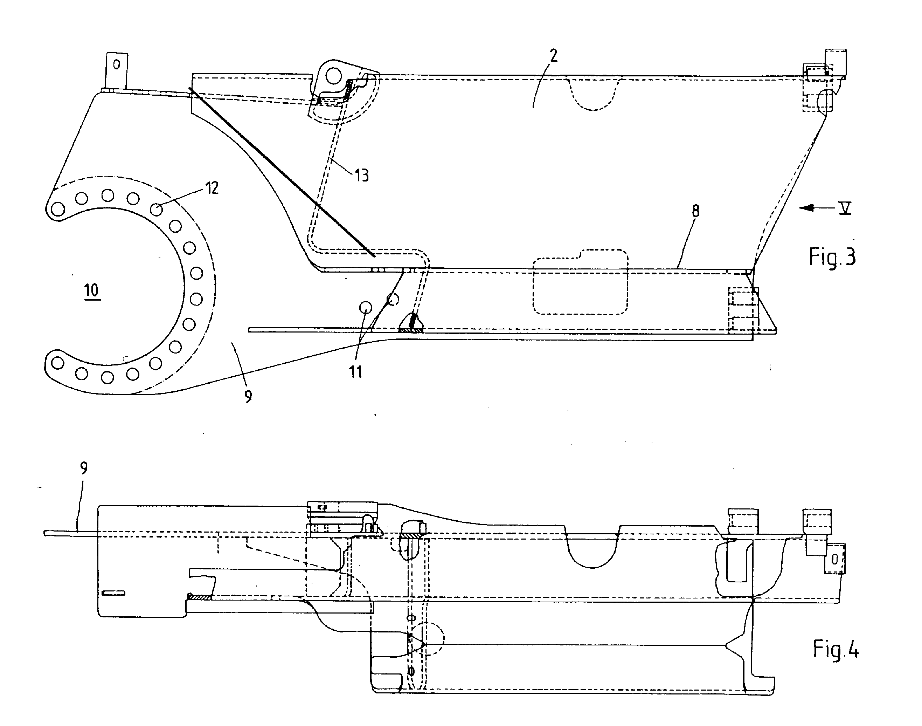

Der Rahmenlängsholm 2 ist in den Figuren 3 und 4 vergrößert dargestellt, wobei Figur 3 die Rahmenaußenseite zeigt. Der Rahmenlängsholm 2 ist im wesentlich identisch zum Rahmenlängsholm 1 aufgebaut. In dem in Figur 3 unteren Bereich des Rahmenlängsholmes 2 ist eine Trittstufe 8 vorgesehen, die das Besteigen des Fahrzeuges erleichtert. Der Mittel- und Heckbereich des Rahmenlängsholmes 2 ist stabiler ausgeführt als der Frontbereich. Im Frontbereich ist ein Blechlappen 9 vorgesehen, der eine kreisförmige Ausnehmung 10 zur Aufnahme einer Radantriebseinheit aufweist. Der Rahmenlängsholm 2 ist eine Schweißkonstruktion. Da es beim Schweißen in aller Regel zu einem Verzug der miteinander zu verschweißenden Bauteile kommt, ermöglicht die relativ biegeweiche Ausbildung des Frontbereiches eine problemlose Montage des Untergurtes 5, der jedoch nach erfolgtem Einbau für eine hohe Stabilität des Rahmens sorgt. Durch die Verwendung eines Blechlappens 9 steht zudem genug Raum innerhalb des Fahrzeugrahmens für großzügig dimensionierte Radantriebseinheiten zur Verfügung. Im Übergangsbereich zwischen dem Blechlappen 9 und dem Mittelbereich des Rahmenlängsholmes 2 sind bodennahe Bohrungen 11 angeordnet. Die kreisförmige Ausnehmung 10 ist von konzentrischen Bohrungen 12 umgeben. Die in der Figur 3 unteren Bohrungen 12 und die Bohrungen 11 sind für die Schraubverbindungen 6 des Untergurtes mit dem Rahmenlängsholm 2 vorgesehen.

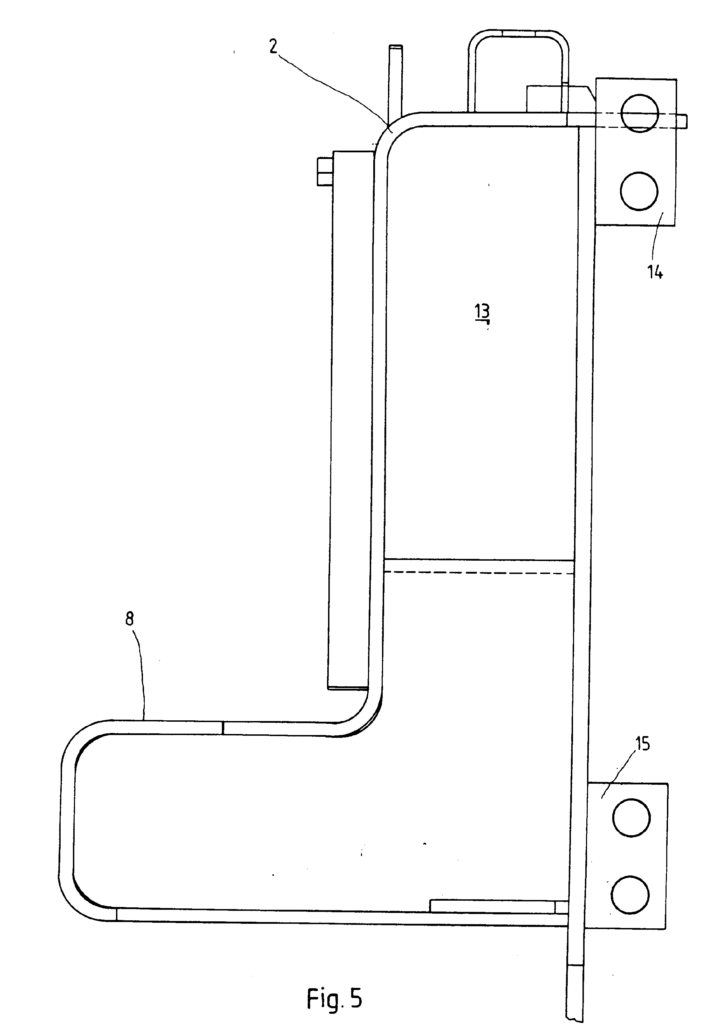

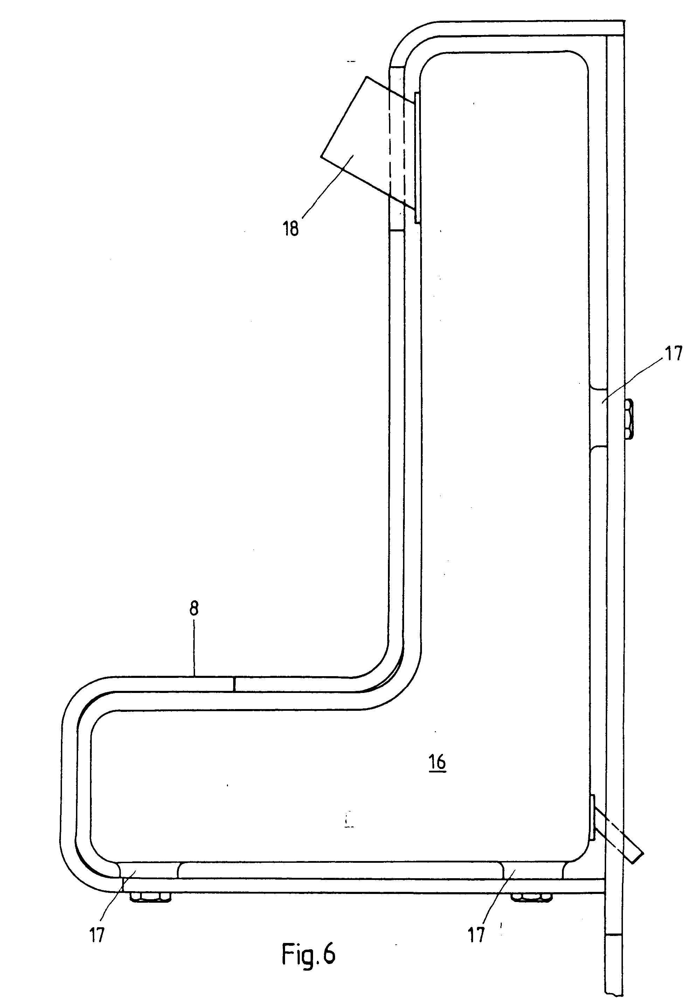

Die Trittstufe 8 bildet zusammen mit dem mittleren und dem heckseitigen Bereich des Rahmenlängsholmes ein Hohlprofil, dessen Struktur aus Figur 5 ersichtlich wird. Die solcherart gebildeten Rahmenlängsholme 1 und 2 sind sehr stabil. Das Hohlprofil ist heckseitig offen und frontseitig durch eine Wand 13 verschlossen. Heckseitige obere und untere Laschen 14 und 15 dienen der Aufnahme der Schraubverbindungen 3 zum Gegengewicht 4. Das Hohlprofil ist zur Aufnahme von Flüssigkeit vorgesehen, dient also als Tank, wobei eine entsprechende Abdichtung vorgesehen sein kann oder in vorteilhafter Weise eine Kunststoffauskleidung, insbesondere ein Kunststoffinnentank 16, wie er in Figur 6 dargestellt ist, vorhanden sein kann. Der heckseitig eingeschobene Kunststoffinnentank 16 verhindert, daß Verschmutzungen, die beim Schweißen des Rahmenlängsholmes entstehen, durch die Nutzung der Hohlräume als Tank in die Flüssigkeit gelangen. Der Kunststoffinnentank 16 ist der Hohlprofilform angepaßt, was herstellungstechnisch keine Probleme bereitet. Der Hohlraum im Rahmenlängsholm 1 kann beispielsweise der Aufnahme eines Kraftstofftanks dienen, während der Hohlraum im Rahmenlängsholm 2 für die Aufnahme eines Hydraulikflüssigkeitstanks vorgesehen sein kann. Der Kunststoffinnentank 16 kann durch Verdickungen 17 mit dem Blech des Rahmenlängsholmes verschraubt sein. Ein Einfüllstutzen 18 wird erst nach der Tankmontage installiert. Der Tank ist in dem stabil ausgebildeten Rahmenlängsholm sicher untergebracht. Die offenen Heckseiten der Hohlräume sind nach der Befestigung des Gegengewichtes 4 verschlossen.

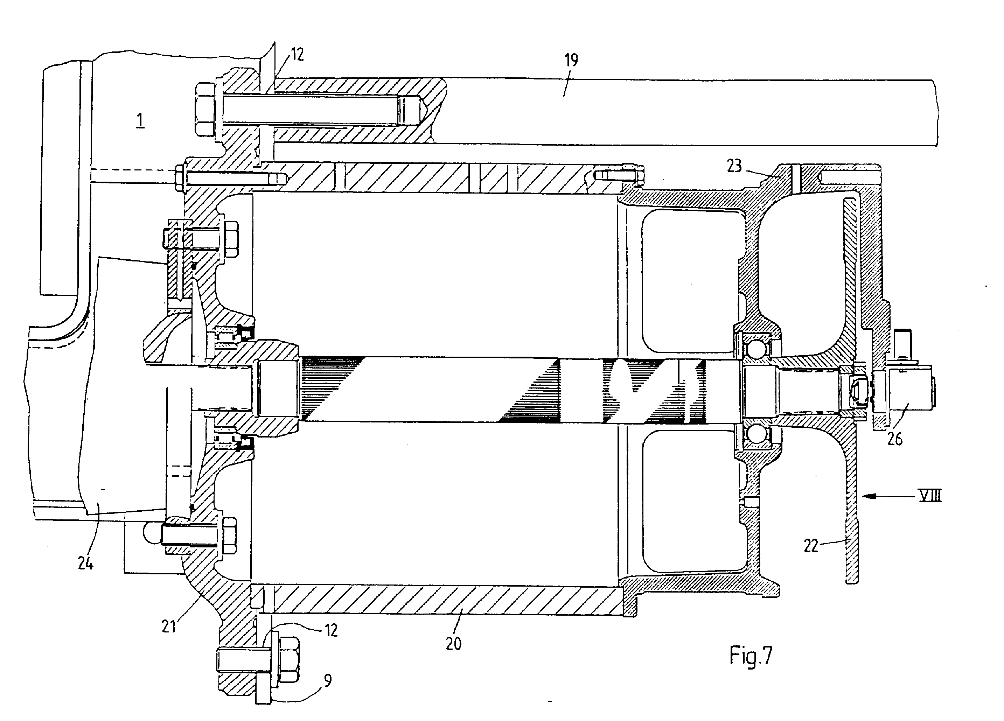

In Figur 7 ist eine Radantriebseinheit dargestellt sowie eine Druckstrebe 19, mit der ebenfalls die beiden Rahmenlängsholme 1 und 2 frontseitig miteinander verbunden sind. Auf eine Darstellung des Untergurtes 5 wurde in dieser Figur der besseren Übersichtlichkeit halber verzichtet. Die Druckstrebe 19 dient der Aufnahme von aus dem Fahrzeuggewicht und den zu transportierenden Lasten resultierenden Druckkräften. Diese entstehen bei Einwirken einer Radkraft. In Folge des Hebelarmes, der zwischen dem Angriffspunkt der Radkraft und dem Blechlappen 9 vorhanden ist, wird ein Drehmoment gebildet, das bestrebt ist, den Blechlappen 9 in Richtung zur Fahrzeuglängsachse zu drücken.

Die Druckstrebe 19 ist vertikal zum Untergurt 5 beabstandet, so daß in dem entstehenden Zwischenraum genügend Platz für die Aufnahme von zwei Radantriebseinheiten bleibt. Dadurch wird zum einen der zur Verfügung stehende Raum optimal ausgenutzt, zum anderen befindet sich der Radantrieb in einem Bereich, der sehr gut zur Aufnahme von Radkräften geeignet ist und sich nur wenig verformt. Für jedes Rad ist eine einzelne Radantriebseinheit vorgesehen. Die Radantriebseinheiten stehen untereinander nicht in mechanischer Verbindung. Die durch die bei der Herstellung des Fahrzeugrahmens auftretenden Toleranzen erzeugten Verspannungen beim Zusammenbau der Rahmenlängsholme werden daher nicht in die Radantriebseinheiten, sondern in den Untergurt 5 und die Druckstrebe 19 verlagert.

Eine Radantriebseinheit besteht aus einem Elektromotor 20, der in Verlängerung der Radachse im Inneren des Rahmens angeordnet und über einen Ringflansch 21 am Blechlappen 9 befestigt ist. Der Einfachheit halber ist in der Figur nur das Gehäuse und die Abtriebswelle des Elektromotors dargestellt. Der Außendurchmesser des Elektromotors 20 entspricht im wesentlichen dem Innendurchmesser der Ausnehmung 10. Die Befestigung des Ringflansches 21 am Blechlappen 9 erfolgt mit Hilfe der Bohrungen 12. Über eine der oberen Bohrungen 12 wird auch die eine Seite der Druckstrebe 19 am Rahmenlängsholm befestigt. Am rahmeninneren Axialende des Elektromotors 20 ist eine Scheibenbremsanlage, bestehend aus einer Bremsscheibe 22 und einem Bremssattelträger 23, befestigt. Am radnahen Ende des Elektromotors 20 ist an dem Ringflansch 21 ein Planetengetriebe 24 befestigt, das die in der Figur nicht dargestellte Radfelge trägt. Auf eine detaillierte Darstellung des Planetengetriebeaufbaues wurde verzichtet.

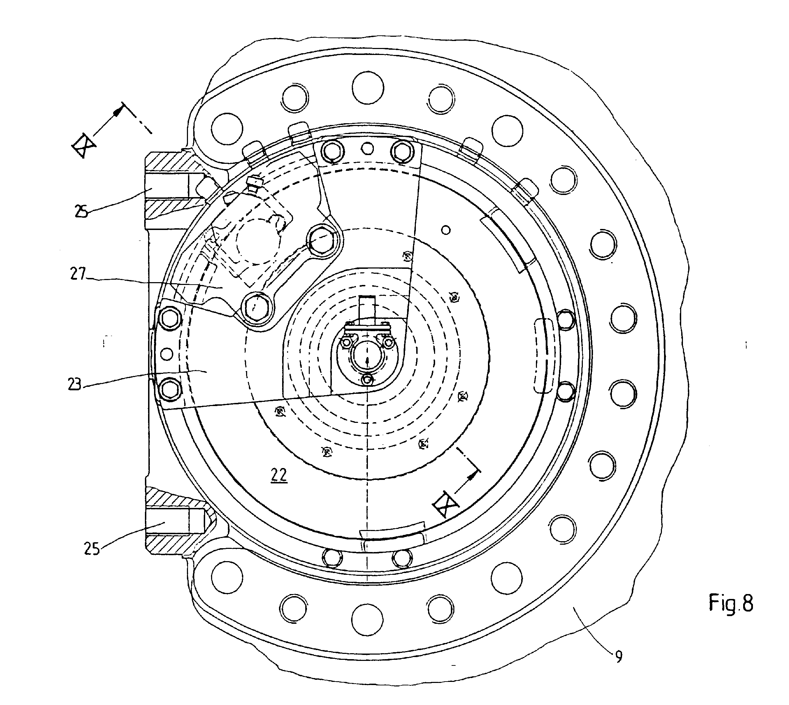

Der Ringflansch 21 bildet in diesem speziellen Beispiel das Lagerschild des Elektromotors 20. Der Ringflansch 21 ist zur Befestigung des Hubgerüstes des Gabelstaplers vorgesehen, was aus Figur 8 ersichtlich ist, wo die zu diesem Zweck vorhandenen Gewindebohrungen 25 dargestellt sind. Es ist möglich, ohne Demontage des Hubgerüstes sowohl den Elektromotor 10 als auch das Planetengetriebe 24 zu entfernen, weil der Ringflansch 21 im allgemeinen immer am Blechlappen 9 befestigt ist. Nach Abnahme des Hubgerüstes kann aber auch sehr leicht die komplette Radantriebseinheit nach Lösen der Befestigungsschrauben des Ringsflansches 21 aus dem Rahmenlängsholm gezogen werden.

Am rahmeninneren Ende der Radantriebseinheit ist ein Drehzahlgeber 26 an dem Bremssattelträger 23 befestigt. Die Schraubverbindungen zwischen dem Ringflansch 21 und dem Blechlappen 9 dienen gleichzeitig der Befestigung der Druckstrebe 19 und des Untergurtes 5. Diese Teile bilden im zusammengebauten Zustand einen äußerst stabilen Frontbereich des Fahrzeugrahmens.

Der Radstand der Vorderachse ist bestimmt von den axialen Abmessungen der Radantriebseinheiten. Der Radstand wiederum ist maßgebend für die Baubreite des Gabelstaplers. Um in enger Umgebung arbeiten zu können, ist es erwünscht, daß Gabelstapler bei hoher Tragkraft und hoher Antriebskraft eine möglichst geringe Baubreite aufweisen. Um einen möglichst geringen Radstand zu erreichen bzw. um bei gegebenem Radstand möglichst große und damit leistungsfähige Radantriebseinheiten unterbringen zu können, hat jede Bremsscheibe 22 einen eigenen Bremssattel 27, wobei die beiden Bremssättel 27 zueinander drehversetzt angeordnet sind.

Beispielsweise ist, wie aus Figur 8 ersichtlich, der auf dem Bremssattelträger 23 befestigte Bremssattel 27 in Fahrtrichtung nach vorne oben geneigt. Der gegenüberliegende, d.h. vor der Zeichenebene befindliche, zu der zweiten nicht gezeigten Radantriebseinheit gehörende Bremssattel kann beispielsweise gegen die Fahrtrichtung nach hinten oben geneigt sein. Dadurch können beide Radantriebseinheiten sehr nahe aneinander gerückt werden und daher entweder ein enger Radstand oder große Elektromotoren realisiert werden. Der verbleibende Abstand beträgt nur wenig mehr als die Breite einer Bremssattelhälte 27a. Dieser Abstand ist auch ausreichend für die Unterbringung des Drehzahlgebers 26. Als Bremssattel 27 findet ein serienmäßiger Bremssattel Verwendung, wie er auch im Automobilbau zum Einsatz kommt.

**Patentansprüche**

1. Fahrzeug mit zwei frontseitig auf einer gemeinsamen Mittelachse angeordneten Radantriebseinheiten, von denen jede eine am radfernen Axialende der Einheit angeordnete Scheibenbremse (22, 23, 27) aufweist, dadurch gekennzeichnet, daß jede Bremsscheibe (22) mit einem eigenen Bremssattel (27) versehen ist und die Bremssättel (27) zueinander drehversetzt angeordnet sind.

**Claims**

1. A vehicle comprising two wheel driving units which at the front end are arranged on a common central axle, and each of which is provided with a disc brake (22, 23, 27) arranged at the axial end of the unit remote from the wheel, characterised in that each brake disc (22) is equipped with an individual caliper (27) and the calipers (27) are arranged so as to be rotationally offset with respect to one another.

**Revendications**

1. Véhicule à deux unités d'entraînement de roues avant montées sur un axe médian commun, chaque unité ayant à son extrémité d'axe éloignée de la roue, un frein à disque (22, 23, 27), véhicule caractérisé en ce que chaque frein à disque (22) est équipé d'un étrier de frein (27) indépendant et les étriers de frein (27) sont montés décalés en rotation l'un par rapport à l'autre.

Fig.1

EP 0 391 291 B1

Fig. 2

EP 0 391 291 B1

Fig.3

Fig.4

Fig. 5

Fig. 6

Fig.7

Fig.8

Fig. 9